# EUROPEAN PATENT APPLICATION

(11) **EP 1 890 108 A1**
(43) Date of publication of application: **20.02.2008**
(21) Application number: 06746651.6
(22) Date of filing: 19.05.2006
(51) Int. Cl.: G01C 21/00, G06F 11/00, G08G 1/0969

(54) **NAVIGATION DEVICE, DATA UPDATING METHOD, AND DATA UPDATING PROGRAM**

(30) Priority: 10.06.2005 JP 2005171499
(71) Applicant: Pioneer Corporation, Tokyo 153-8654 (JP)
(72) Inventor: YAMADA, Ryuichi, c/o Pioneer Corporation, Kawagoe-shi, Saitama 3508555 (JP); KOGA, Yuji, c/o Pioneer Corporation, Kawagoe-shi, Saitama 3508555 (JP); IMASAKA, Naoto, c/o Pioneer Corporation, Kawagoe-shi, Saitama 3508555 (JP); KUSUMOTO, Yuuki, c/o Pioneer Corporation, Kawagoe-shi, Saitama 3508555 (JP); UCHIDA, Takayuki, c/o Pioneer Corporation, Kawagoe-shi, Saitama 3508555 (JP)
(74) Representative: Haley, Stephen
(86) International application number: PCT/JP2006/309995
(87) International publication number: WO 2006/132065

(57) **Abstract**

A navigation apparatus including a storage unit (101), an acquiring unit (102), a comparing/identifying unit (103), an updating unit (104), and a control unit (105), has data required for the navigation operation (hereinafter, "data") stored in a plurality of areas, and acquires data from an external recording medium. The comparing/identifying unit (103) compares and identifies the stored data and the acquired data, and the updating unit (104) controls the update of the data in the plurality of areas of the storage unit (101) based on the comparison/identification result. At least while updating the data, the control unit (105) performs the navigation operation utilizing data not in the process of being updating among the stored data and the acquired data.

## Description

### TECHNICAL FIELD

The present invention relates to a navigation apparatus mounted on vehicles, etc., a data updating method, and a data updating program. However, the present invention is not limited to the above navigation apparatus, the data updating method, and the data updating program.

### BACKGROUND ART

Recently, for example, navigation systems equipped with a plurality of recording media (storage units) such as a DVD (Digital Versatile Disc) and a HD (Hard Disc) from which map data can be read are provided offering highly convenient navigation operation for users by accessing the storage units, which are optimal for reading necessary map data.

For example, such navigation systems are configured as follows. That is, when a target file of map data is read out in the navigation system, a priority flag is referred to. If the priority flag is set for DVD, the target file is read from the DVD and if the priority flag is set for HD, an HD management area is accessed to read the target file from the HD, provided that the target file is stored in the HD and the update date and time thereof are not old. On the other hand, if the target file is read from the DVD, the target file is stored in the HD after ensuring an available space in the HD. In this configuration, necessary map data can be read from a plurality of storage units and used for the navigation operation, and the optimal map data can be selectively used even during the navigation (see, for example, Patent Document 1).

This navigation system also determines the update date and time of the map data recorded in the plurality of the storage units and selectively accesses the storage unit having the map data with the latest determined update date and time to read the corresponding map data. In this configuration, the most recent map data can be selectively utilized from among map data that are continuously updated having different recentness.

Patent Document 1: Japanese Patent Application Laid-Open Publication No. 2001-165675 DISCLOSURE OF INVENTION

### PROBLEM TO BE SOLVED BY THE INVENTION

However, in a navigation system of the above conventional technology, for example, when map data are updated, utilization of a navigation function must be stopped to update the data and an example of a problem is that the navigation function cannot be utilized until the updating of data has been completed for a portion of the data that is required to activate the navigation function.

For example, since data are updated by writing updated (new) data while non-updated (old) data are left in a storage unit and then deleting the old data after the data update is completed, a given amount of work area is necessary and an example of a problem is that it is difficult to reduce the required capacity of the storage unit. In this case, an example of a problem is that the control of the timing of deletion is troublesome when deleting the old data after the data update is completed.

### MEANS FOR SOLVING PROBLEM

A navigation apparatus according to the invention of claim 1 includes a storage unit that stores, in a plurality of areas, data necessary for navigation operation; an acquiring unit that acquires the data from an external recording medium; a comparing/identifying unit that compares and identifies the data stored in the storage unit and the data acquired by the acquiring unit; an updating unit that controls, based on comparison/identification results of a comparison and an identification by the comparing/identifying unit, an update of the data in the plurality of areas of the storage unit; and a control unit that, at least while the updating unit is performing the update of the data, performs navigation operation utilizing data that are not being subjected to the update among the data stored in the storage unit and the data acquired by the acquiring unit.

Further, a data update method according to the invention of claim 5 includes a storing step of storing, in a plurality of areas, data necessary for navigation operation; an acquiring step of acquiring the data from an external recording medium; a comparing/identifying step of comparing and identifying the data stored in the storage unit and the data acquired by the acquiring unit; an updating step of controlling, based on comparison/identification results of a comparison and an identification by the comparing/identifying unit, an update of the data in the plurality of areas of the storage unit; and a control step of performing navigation operation utilizing data that are not being subjected to the update among the data stored in a storage unit and the data acquired at the acquiring step at least while the updating unit is performing the update of the data.

Moreover, a data update program according to the invention of claim 9 causes a computer to execute the date update method according to any one of claims 5 to 8.

### BRIEF DESCRIPTION OF DRAWINGS

Fig. 1 is a block diagram of an example of a functional configuration of a navigation apparatus according to an embodiment;
Fig. 2 is a flowchart of an example of a data updating process of the navigation apparatus according to the embodiment;
Fig. 3 is a block diagram of an example of the hardware configuration of the navigation apparatus according to the example;
Fig. 4 is a schematic view of the navigation operation process and a data update process of the navigation apparatus according to the example;
Fig. 5 is a flowchart of the data update process of the navigation apparatus according to the example of the present invention;
Fig. 6 is an explanatory view of an overview of the data update process of the navigation apparatus according to the example;
Fig. 7 is an explanatory view of an overview of the data update process of the navigation apparatus according to the example;
Fig. 8 is an explanatory view of an overview of the data update process of the navigation apparatus according to the example;
Fig. 9 is an explanatory view of an overview of the data update process of the navigation apparatus according to the example;
Fig. 10 is an explanatory view of the overview of the navigation operation of the navigation apparatus according to the example;
Fig. 11 is an explanatory view of the overview of the navigation operation of the navigation apparatus according to the example;
Fig. 12 is an explanatory view of the overview of the navigation operation of the navigation apparatus according to the example; and
Fig. 13 is an explanatory view of the overview of the navigation operation of the navigation apparatus according to the example.

### EXPLANATIONS OF LETTERS OR NUMERALS

- 101: storage unit
- 102: acquiring unit
- 103: comparing/identifying unit
- 104: updating unit
- 105: control unit
- 106: output unit
- 301: CPU
- 302: ROM
- 303: RAM
- 304: HDD
- 305: HD
- 306: DVD drive
- 307: DVD
- 308: video/audio I/F
- 311: input I/F
- 314: communication I/F

### BEST MODE(S) FOR CARRYING OUT THE INVENTION

With reference to the accompanying drawings, an exemplary embodiment of a navigation apparatus, a data updating method, and a data updating program according to the present invention is explained in detail.

### (Embodiment)

### (Functional Configuration of Navigation Apparatus)

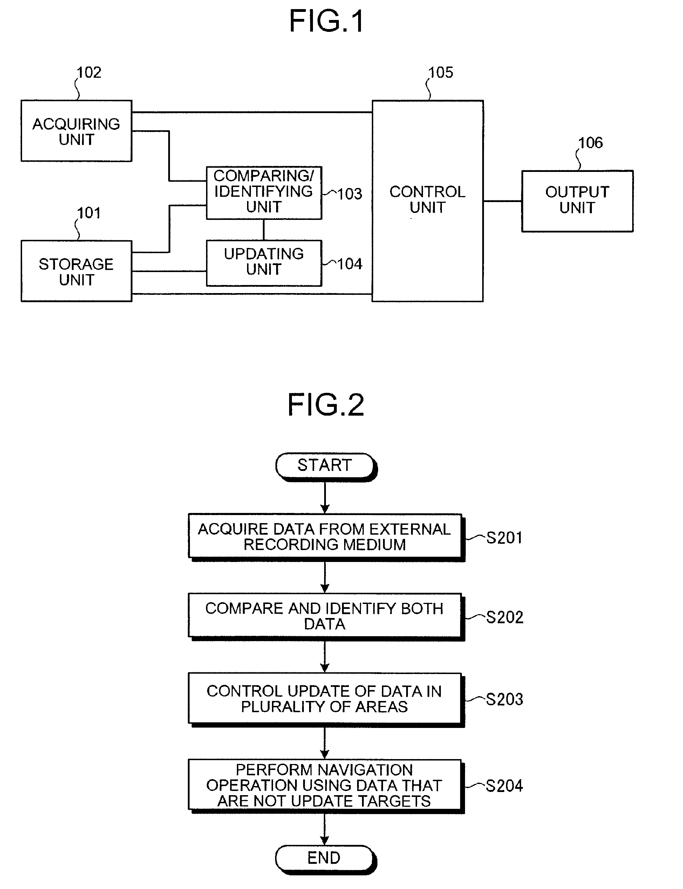

Details of a navigation apparatus according to an embodiment of the present invention will be described. Fig. 1 is a block diagram of an example of a functional configuration of the navigation apparatus according to the embodiment of the present invention. A shown in Fig. 1, the navigation apparatus is mounted on a moving object such as a vehicle (including four-wheel vehicles and two-wheel vehicles) and includes a storage unit 101, an acquiring unit 102, a comparing/identifying unit 103, an updating unit 104, and a control unit 105, and an output unit 106 is further included.

The storage unit 101 stores, in a plurality of areas, data necessary for the navigation operation. Specifically, the data required for the navigation operation include map data and program data used with the navigation operation. The areas of the storage unit 101 is configured by a data area storing the map data and the program data and a user area storing user data related to the navigation operation, and the data area is may be further divided into a plurality of areas.

The acquiring unit 102 acquires the data required for the navigation operation from an external recording medium. The external recording medium is a recording medium removable from the navigation apparatus and specifically includes optical discs such as DVDs (Digital Versatile Disc) and CDs (Compact Disc). For example, PC cards and memory cards may be used for the external recording medium.

The comparing/identifying unit 103 compares and identifies the data required for the navigation operation stored in the storage unit 101 and the data required for the navigation operation acquired by the acquiring unit 102. Specifically, the comparison and identification of the data by the comparing/identifying unit 103 are performed by comparing the update date/time and versions of the data in the areas of the storage unit 101 to identify the newer data.

The updating unit 104 controls the update of the data required for the navigation operation in the areas of the storage unit 101 based on the comparison/identification results of the comparison and identification by the comparing/identifying unit 103. That is, the data update by the updating unit 104 is performed for each of areas of the storage unit 101. The updating unit 104 controls the update such that if the comparing/identifying unit 103 identifies, by comparison, the data required for the navigation operation acquired by the acquiring unit 102 to be newer, the data required for the navigation operation acquired by the acquiring unit 102 are written into the area to be updated among the areas of the storage unit 101 after the data required for the navigation operation stored in the storage unit 101 are deleted.

At least while the updating unit 104 is updating the data required for the navigation operation, the control unit 105 performs the navigation operation with the use of data not in the process of being updating among the data required for the navigation operation stored in the storage unit 101 and the data required for the navigation operation acquired by the acquiring unit 102. Therefore, regardless of whether the updating unit 104 is updating the data required for the navigation operation, the control unit 105 can perform the navigation operation using the data required for the navigation operation from the storage unit 101 or the acquiring unit 102.

If the comparing/identifying unit 103 identifies, by comparison, the data required for the navigation operation acquired by the acquiring unit 102 to be newer, the control unit 105 performs the navigation operation utilizing program data included in the acquired data. Therefore, the control unit 105 can perform the navigation operation with the data required for the navigation operation acquired from the external recording medium.

The updating unit 104 adds index information indicating update states of the data required for the navigation operation stored in the areas of the storage unit 101, and the control unit 105 refers to the index information added by the updating unit 104 and can preferentially use the updated data necessary for the navigation operation stored in the areas of the storage unit 101 to perform the navigation operation if the index information indicates that the data are updated.

The output unit 106 outputs data related to the progress of the data update performed by the updating unit 104 and data related to the navigation operation performed by the control unit 105. The data output of the output unit 106 is performed through display output or audio output.

In the navigation apparatus with this configuration, the control unit 105 can use the data not in the process of being updated to perform the navigation operation even when the updating unit 104 is updating the data required for the navigation operation. Therefore, with this navigation apparatus, the navigation function can be utilized even during the data update and the convenience for users can be improved.

In the area to be updated among the areas of the storage unit 101, new data can be written after stored data are deleted. Therefore, a conventionally required given amount of work area of the storage unit 101 is not needed for the data update, and the capacity of the storage unit 101 can be reduced. Since the updating unit 104 adds the index information, if the data update is interrupted, the data update can easily be resumed. Since the navigation operation can be performed utilizing the updated data stored in the areas of the storage unit 101 by reference to the index information, high-speed navigation operation can easily be continued.

### (Data Updating Process Procedure of Navigating Apparatus)

The data updating process of the navigation apparatus according to the embodiment of the present invention will be described. Fig. 2 is a flowchart of an example of the data updating process of the navigation apparatus according to the embodiment of the present invention. In Fig. 2, the data required for the navigation operation are referred to as "data".

In the flowchart shown in Fig. 2, first, the acquiring unit 102 acquires data from an external recording medium (step S201). The comparing/identifying unit 103, using the data stored in the storage unit 101 and the data acquired by the acquiring unit 102, compares both data and identifies the newer data (step 5202).

After comparing and identifying both data, the updating unit 104 controls the update of the data in the areas of the storage unit 101 based on the comparison/identification results (step S203). At least while the updating unit 104 is updating the data, the control unit 105, using the data stored in the storage unit 101 and the data acquired by the acquiring unit 102 to perform the navigation operation, uses data not in the process of being updated among both data (step S204), thereby terminating the data update process in this flowchart.

Although not shown, the output unit 106 may output data related to progress of the data update at step S203 and data related to the navigation operation at step S204 by display or audio output. Through the execution of this data updating process, the navigation operation can be performed utilizing data not in the process of being updating even when the data update is in progress, and the convenience for users can be improved since the navigation function can be utilized even during the data update.

As described above, with the navigation apparatus according to the embodiment of the present invention, the navigation operation can be performed utilizing data not in the process of being updating even when the update of the data required for the navigation operation is in progress. Therefore, the navigation function can be utilized even during the update of the data required for the navigation operation and the convenience for users can be improved.

An example according the embodiment of the present invention will then be described. A data updating method according to the embodiment will be described here by exemplifying the case of implementing the data updating method according to the embodiment in a vehicle-mounted navigation apparatus.

### Example

### (Hardware Configuration of Navigation Apparatus)

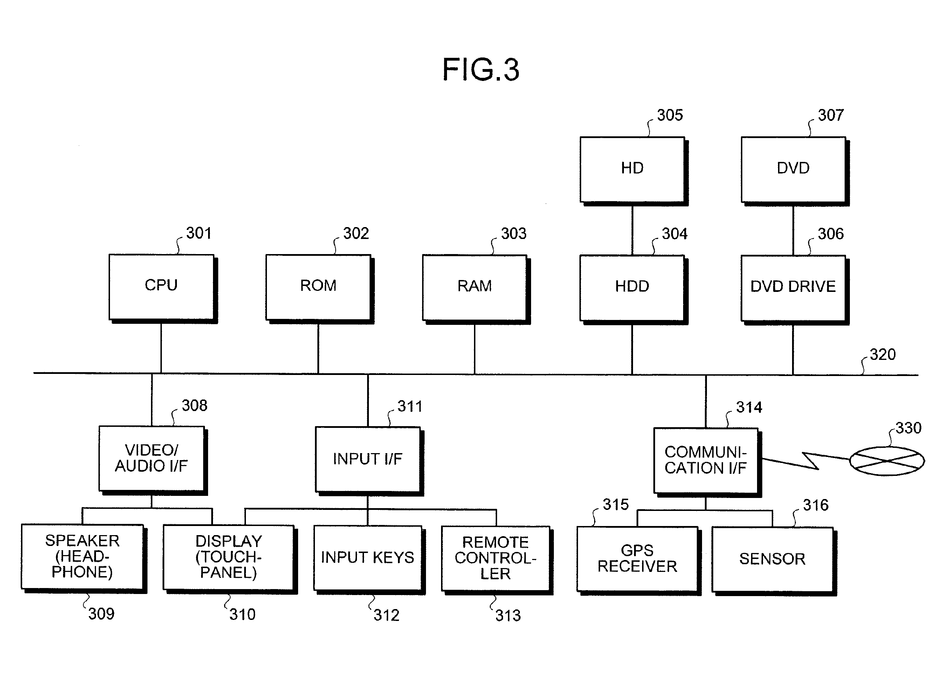

A hardware configuration of the navigation apparatus according to the example of the present invention will be described. Fig. 3 is a block diagram of an example of the hardware configuration of the navigation apparatus according to the example of the present invention.

As shown in Fig. 3, the navigation apparatus includes a CPU 301, a ROM 302, a RAM 303, an HDD (hard disc drive) 304, an HD (hard disc) 305, a DVD drive 306, a DVD 307 that is an example of a removable recording medium, a video/audio I/F (interface) 308, a speaker (or headphone) 309, a display (or touch panel) 310, an input I/F (interface) 311, input keys 312, a remote controller 313, a communication I/F (interface) 314, a GPS receiver 315, and a sensor 316. The constituent units 301 to 316 are connected through a bus 320 to each other.

The CPU 301 executes predetermined calculation processes and is responsible for the overall control of the navigation apparatus. Specifically, the CPU 301 executes processes related to the navigation operation for the navigation and executes processes related to the data update for the data update. The navigation operation and the data update may concurrently be performed with the CPU 301, and a plurality of the CPUs 301 may be disposed.

The ROM 302 stores so-called static data, such as a boot program. In this case, specifically, the ROM 302 stores a basic processing program of the navigation apparatus. Although the data stored in the ROM 302 can be rewritten, for example, by user operations, the data are not erased by power-off.

The RAM 303 stores so-called variable data in a rewritable manner and is used as a work area of the CPU 301. For example, the RAM 303 may be a volatile memory where stored data are erased by power-off or may be a nonvolatile memory which is backed up by a battery, etc.

The HDD 304 controls read/write of data to/from the HD 305 under the control of the CPU 301. The HD 305 stores the data written under the control of the HDD 304. Specifically, for example, the HDD 305 stores the map data used for the navigation. The HD 305 also stores various program data necessary for implementing the navigation function, for example.

The map data stored in the HD 305 include background data indicating geographic objects, for example, buildings, rivers, and ground surfaces, and road-shape data indicating the shapes of roads, and are data depicted two-dimensionally or three-dimensionally on the display (or touch panel) 310 described hereinafter.

The background data include background-shape data indicating shapes of the background and background-type data indicating types of the background. The background-shape data include data indicating representative points of geographic objects, polylines, polygons, and coordinates of geographic objects, for example. The background-type data include text data indicating names, addresses, and telephone numbers of geographic objects, for example, and type data indicating types of geographic objects such as buildings and rivers.

The road-shape data are data related to a road network having pluralities of nodes and links. The node is data indicating an intersection where roads intersect, such as three-way intersections, crossroads, and five-way intersections. The link is data indicating a road linking the nodes. Some links include supplemental-shape points that enable representation of curved roads.

The road-shape data also include traffic condition data. The traffic condition data are data indicating characteristics of intersections, lengths (distances) of the links, vehicle widths, movement directions, road types, etc. The characteristics of intersections include intersections having complicated shapes such as three-way intersections and five-way intersections, intersections formed by roads branched at a shallow angle, intersections in the vicinity of a destination, approaches/exits and junctions of expressways, and intersections with a high route deviation rate. The route deviation rate can be calculated from past travel histories of a vehicle, for example. The road types include expressways, toll roads, and general roads, for example.

The DVD drive 306 controls read/write of data to/from the DVD 307 under the control of the CPU 301. The DVD 307 is a writable and removable recording medium in the form having recorded thereon the data written under the control of the DVD drive 306 and enabling the recorded data to be read in accordance with the control of the DVD drive 306. Specifically, the DVD 307 stores the map data similar to the data stored in the above HD 305, for example, and various program data. The data recorded on the DVD 307 include data newer than those stored in the HD 305.

For example, various recording media such as CD-ROMs (CD-R, CD-RW), MOs (Magneto-Optical disc), and memory cards can be utilized for the removable recording medium along with the above DVD 307. When utilizing these recording media, dedicated drive apparatuses capable of writing data onto the various recording media and reading data recorded on the various recording media may arbitrarily be used instead of the DVD drive 306 or in addition to the DVD drive 306. The map data and the various program data stored (recorded) on the HD 305 and the DVD 307 may permanently or temporarily be stored in the ROM 302 or the RAM 303.

The video/audio I/F 308 is connected to the speaker (or headphone, the same applies hereinafter) 309 for audio output and the display (or touch panel, the same applies hereinafter) 310 for video display. Specifically, the video/audio I/F 308 includes, for example, a D/A converter that converts audio digital signals into audio analog signals, an amplifier that amplifies the audio analog signals output from the D/A converter, and an A/D converter that converts the audio analog signals into the audio digital signals for audio control.

Specifically, the video/audio I/F 308 includes, for example, a graphic controller that generally controls the display 310, a buffer memory such as VRAM (Video RAM) that temporarily stores data such as images that can immediately be displayed, and a control IC or GPU (Graphics Processing Unit) that controls image display on the display 310 based on data output from the graphic controller for video control.

Specifically, the speaker 309 outputs navigation guide sounds for the navigation, for example. The speaker 309 also outputs sounds based on audio data acquired through the communication I/F 314 described hereinafter. If a headphone is employed as the speaker 309, the output style of the guide sounds and the sounds can adaptively be changed such that the entire inner portion of the vehicle equipped with the navigation apparatus does not become the sound field for the output sounds

The display 310 can be any one of a variety of displays such as CRTs (Cathode Ray Tubes), TFT (Thin Film Transistor) liquid crystal displays, organic EL (Electroluminescence) displays, and plasma displays. Specifically, the display 310 can be configured by a display apparatus for video display connected to the video/audio I/F 308, for example. The display 310 displays icons, cursors, menus, windows, or various types of information such as texts and images.

If the display 310 is a touch panel, the display 310 is connected to the input I/F 311 described hereinafter, and press-down/non-press-down of the touch panel is detected and input into the input I/F 311. In this case, the touch panel is superimposed and used on the display 309, for example. The CPU 301 manages the display timing of images on the display 309 and the timing of user operations and the position coordinates thereof through the input I/F 311 to recognize information input by input operations.
The touch panel can be any one of various known touch panels such as a resistive-film type and a pressure-sensitive type.

The input I/F 311 outputs to the CPU 301 the information input through user operations such as characters, numeric values, and various instructions transmitted from the input keys 312 or the remote controller 313 including some or all of the input keys 312. The input keys 312 are configured by and the functions thereof are implemented by various known forms such as push-button switches physically detecting press-down/non-press-down, a keyboard, a joystick, a track ball, a mouse, and input buttons included in the navigation apparatus, and combinations thereof.

A microphone that inputs external sounds may be employed instead of the input keys 312 or along with the input keys 312 to enable input operations to be performed through sounds. The remote controller 313 transmits information to the input I/F 311 from a position that is remote from the navigation apparatus. As described above, if a touch panel superimposed on the display 310 is employed and information can be input from the touch panel to the input I/F 311, a large amount of information can be input without increasing the size of the input keys 312.

The communication I/F 314 has, for example, an antenna not shown and a function of a communication interface (I/F), and is connected to the GPS receiver 315 and the sensor 316. The communication I/F 314 communicates various data between the apparatuses or devices mounted on the vehicle and the navigation apparatus. The communication I/F 314 also communicates with other navigation apparatuses and communicates with an external server not shown through a network 330 such as the Internet. Therefore, the communication I/F 314 can be implemented as a communication device.

The transmission/reception of various data may be performed by the communication I/F 314 regardless of whether it is in a wired or wireless form. The communication I/F 314 may be a communication module such as a mobile phone that performs communication with a communication server through a base station not shown or may be a communication module that performs wireless communication directly with other navigation apparatuses.

The wireless communication of the communication I/F 314 is communication performed by using radio wave, infrared light, supersonic wave, etc., without using wire lines acting as communication media. For example, standards enabling such wireless communication include various technologies such as wireless LAN (Local Area Network), IrDA (Infrared Data Association), HomeRF (Home Radio Frequency), and BlueTooth, and in this example, various known wireless communication technologies can be employed. The wireless LAN can be used as a preferred example from the viewpoint of data transfer rate.

For the navigation, the communication I/F 314 may regularly (or irregularly) receive traffic information such as congestion and traffic regulations. Specifically, the communication I/F 314 may receive the traffic information according to the timing of delivery of the traffic information from the VICS (Vehicle Information and Communication System) center or by regularly requesting the VICS center to deliver the traffic information. In this case, the communication I/F 314 includes a VICS/beacon receiver, for example.

Although detailed description will be omitted as the technology is conventionally known, the "VICS" is an information communication system that transmits traffic information such as congestion and traffic regulations edited/processed in the VICS center in real time to display the traffic information with characters and graphics on vehicle-mounted devices such as navigation apparatuses. Modes for delivering the traffic information edited/processed in the VICS center (VICS information) to navigation apparatuses include a mode of utilizing "beacons" disposed over roads and a mode of utilizing the "FM multiplex broadcasting".

The "beacons" include "radio beacons" mainly used over expressways and "optical beacons" used over main general roads. If the "FM multiple broadcasting" is utilized, a broad-area traffic information can be received. If the "beacons" are utilized, the received information can be traffic information necessary for the position where the own vehicle is located, such as detailed information of nearby roads based on the current position of the vehicle (vehicle position). When receiving the map data and the traffic information from other navigation apparatuses, the communication I/F 314 may include a plurality of communicating units respectively corresponding to the communication mode used in the other navigation apparatuses if different.

The GPS receiver 315 receives radio waves, for example, from satellites to acquire current position information (latitude/longitude information) of the vehicle. The current position information is information for obtaining a geometric position relative to the satellites when receiving radio waves from the satellites as described above, and the measurement can be performed anywhere on the earth. The GPS receiver 315 includes a GPS antenna not shown.

The GPS (Global Positioning System) is a system that receives radio waves from four or more satellites to precisely obtain a position on the ground. Detailed description of the GPS is omitted herein as the technology is conventionally known. As the radio waves from the satellites, carrier waves of 1.57542 GHz and the L1 carrier wave, which carries the C/A (Coarse and Access) codes and navigation messages, are used; thereby enabling the detection of the current position (latitude and longitude) of the vehicle equipped with the navigation apparatus.

When the current position of the vehicle is detected, in addition to the current position information acquired by the GPS receiver 315, the sensor 316 detects various pieces of information that are taken into consideration. That is, the sensor 316 is configured, for example, by a speed sensor that detects the speed of the traveling vehicle, an incline sensor that detects an incline angle of the vehicle, an acceleration sensor that detects acceleration of the vehicle, a lateral G sensor that detects the lateral G (gravity), which is an outward force (gravity) generated by the lateral acceleration at the time of cornering, and a gyroscopic sensor that detects the traveling direction of the vehicle.

Although not shown, the navigation apparatus includes a navigation control unit, a guide sound output unit, a position searching unit, a route acquiring unit, a route guiding unit, and a guide sound generating unit, in addition to the above constituent units. The navigation control unit outputs, to the display 310, information, e.g., a location on a map where the vehicle is traveling, based on the current vehicle position information (vehicle position information) acquired by the GPS receiver 315 through the communication I/F 314 and the map data read from the HD 305 or the DVD 307 through the HDD 304 or the DVD drive 306, for example.

The guide sound output unit controls output to one or a plurality of the speakers 309 through the video/audio I/F 314 to output (reproduce) the guide sounds for the navigation, for example. A point searching unit searches and outputs an arbitrary point to the display 310 based on the information input through the input I/F 311, for example. The route acquiring unit calculates the optimal route, etc., to the point based on the point information acquired by the point searching unit. A route guiding unit generates real-time route guidance information based on the information related to the route acquired by the route acquiring unit and the vehicle position information.

For example, the guide sound generating unit generates data of tones and sounds corresponding to various guide patterns for the navigation. That is, based on the route guide information generated by the route guiding unit, the guide sound generating unit performs setting of a virtual sound source corresponding to the guide points and generates the sound guidance data, which are output to the guide sound output unit.

Specifically, for example, the function of the storage unit 10 shown in Fig. 1 is implemented by the RAM 303 and the HD 305 and the function of the acquiring unit 102 is implemented by the DVD drive 306 and the DVD 307. Specifically, for example, the function of the comparing/identifying unit 103 shown in Fig. 1 is implemented by the CPU 301, and the function of the output unit 106 shown in Fig. 1 is implemented by the speaker 309 and the display 310.

### (Overview of Navigation Operation Process and Data Update Process of Navigation Apparatus)

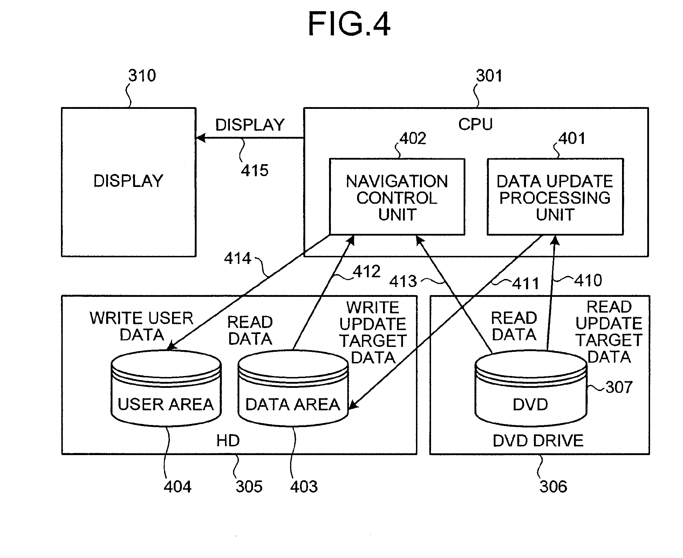

An overview of a navigation operation process and a data update process of the navigation apparatus according to the example of the present invention will be described. Fig. 4 is a schematic view of the navigation operation process and the data update process of the navigation apparatus according to the example of the present invention. Specifically, the process shown in Fig. 4 is implemented by the CPU 301 executing the program stored (recorded) in the ROM 302, the RAM 303, the HD 305, the DVD 307, etc., of the navigation apparatus shown in Fig. 3, for example.

In Fig. 4, the CPU 301 includes functions of a data update processing unit 401 and a navigation control unit 402. The HD 305 includes a data area 403 storing the map data and the program data (hereinafter, "data"), which are required for the navigation operation, and a user area 404 storing the user data related to the navigation operation. The DVD drive 306 includes the DVD 307 having recorded thereon the data related to the navigation operation.

The CPU 301 can concurrently execute the data update process of the data update processing unit 401 and the navigation operation process of the navigation control unit 402. That is, in the data update process executed by the data update processing unit 401, the data stored in the data area 403 of the HD 305 and the data recorded on the DVD 307 are compared to identify the newer data, for example.

If the data recorded on the DVD 307 are newer, the data update processing unit 401 deletes, from the data area 403 of the HD 305, update target data corresponding to relevant updatable data and reads the update target data from the DVD 307 as shown by an arrow 410. The update target data read from the DVD 307 are written into the data area 403 of the HDD 305 to execute the data update process as shown by an arrow 411. At this time, the data update processing unit 401 adds, to the HD 305, index information indicating a data update state.

On the other hand, at least while the data update processing unit 401 is updating the data, the navigation operation process executed by the navigation control unit 402 is executed by reading data not in the process of being updating among the data stored in the data area 403 of the HDD 305, as shown by an arrow 412, and the data recorded in the DVD 307, as shown in an arrow 413.

At this time, the navigation control unit 402 writes, into the user area 404 of the HD 305, the user data associated with the user operation input as shown by an arrow 414. As described above, the CPU 301 can concurrently execute the data update process of the data update processing unit 401 and the navigation operation process of the navigation control unit 402. As shown by an arrow 415, the data related to the processes executed by the CPU 301 are output to and displayed on the display 310 after a drawing process.

### (Data Update Process of Navigation Apparatus)

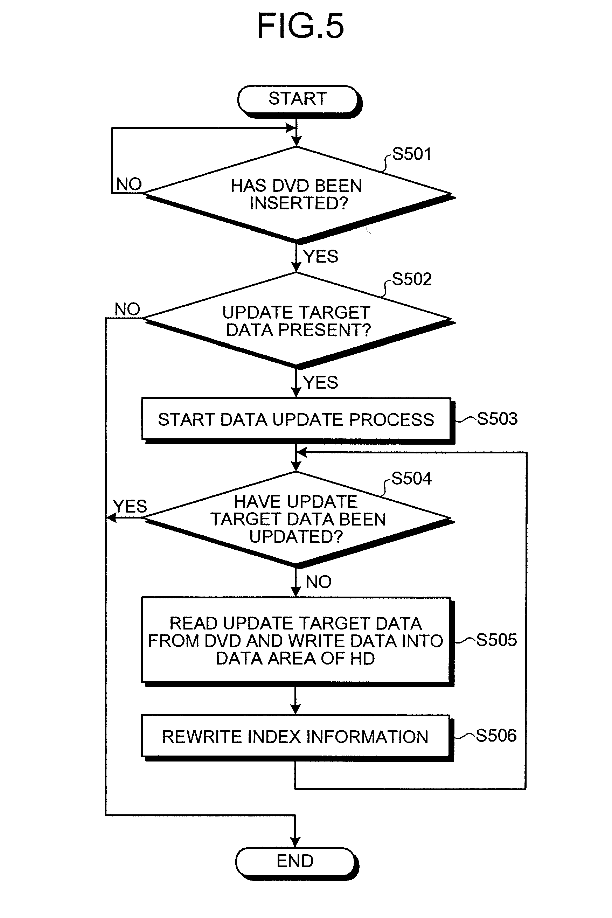

A data update process of the navigation apparatus according to the example of the present invention will be described as a premise of the navigation operation process and the data update process described above. Fig. 5 is a flowchart of the data update process of the navigation apparatus according to the example of the present invention.

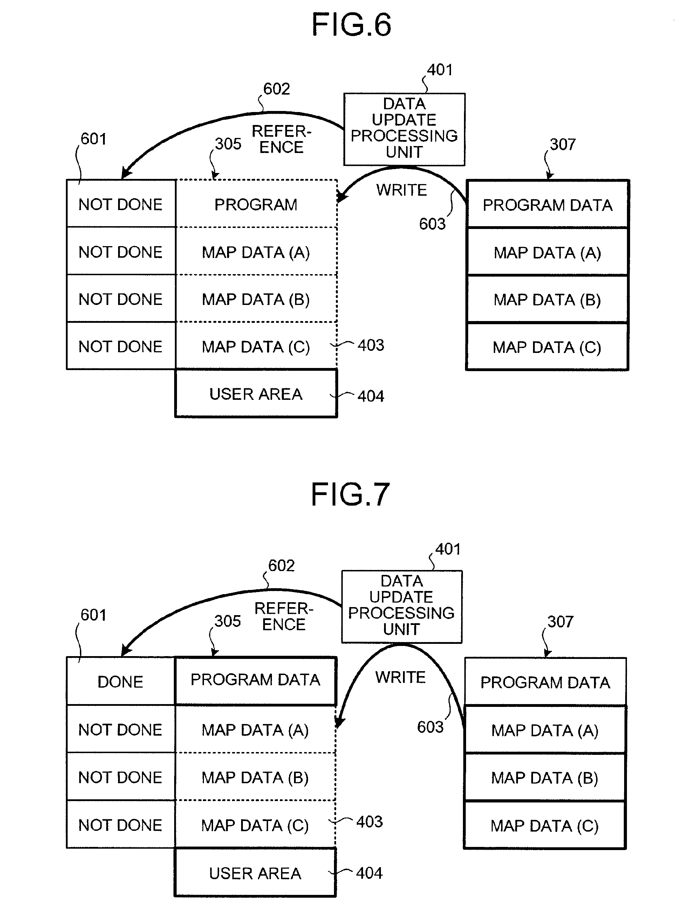

Figs. 6 to 9 are explanatory views of an overview of the data update process of the navigation apparatus according to the example of the present invention. Specifically, the process shown in Fig. 5 is implemented by the CPU 301 executing the program stored (recorded) in the ROM 302, the RAM 303, the HD 305, the DVD 307, etc., of the navigation apparatus shown in Fig. 3, for example. In the following description, the same reference numerals are given to elements identical to the elements already described and the description thereof will be omitted.

As shown in Fig. 5, the CPU 301 determines whether the DVD 307 has been inserted through the DVD drive 306 (step S501). If it is determined that the DVD 307 has not been inserted (step S501: NO), the process is repeated. If it is determined that the DVD 307 has been inserted (step S501: YES), the CPU 301 compares and identifies the data stored (recorded) in the data area 403 of the HD 305 and the data recorded on the DVD 307 to determine whether the update target data exist on the DVD 307 (step S502).

If it is determined that the update target data exist (step S502: YES), the data update processing unit 401 of the CPU 301 starts the data update process (step S503). When the data update process is started, the data update processing unit 401 of the CPU 301 refers to the index information of the HD 305 to determine whether the update target data have been updated (step S504).

If it is determined that the update target data have not updated (step S504: NO), the data update processing unit 401 of the CPU 301 reads the update target data from the DVD 307, writes the data into the data area 403 of the HD 305 (step S505), and rewrites the index information to indicate "not-updated (not done) → updated (done)" (step S506).

That is, specifically, as shown in Fig. 6, at the step S504, the data update processing unit 401 of the CPU 301 refers to the index information stored in an index area 601 of the HD 305 as shown by an arrow 602. The data update processing unit 401 then compares program data and map data (A) to (C) recorded on the DVD 307 and program data and map data (A) to (C) recorded in the data area 403 of the HD 305. If the update target data are present on the DVD 307, the data update processing unit 401 reads the update target data from the DVD 307 and writes the data into the data area 403 of the HD 305 at the aforementioned step S505 as shown by an arrow 603. The data update is performed starting from the program data in this case.

When the data update of the program data is completed, the data update processing unit 401 of the CPU 301 rewrites the index information in the index area 601 of the HD 305 to indicate "not-updated (not done) → updated (done)" as shown in Fig. 7 at step S506. After the index information is rewritten at step S506, the process goes to step S504 to execute a determination process. If it is determined at step S502 that no update target data are present (step S502: NO) and if it is determined at step S504 that the update target data have been updated (step S504: YES), the data update process of this flowchart is terminated.

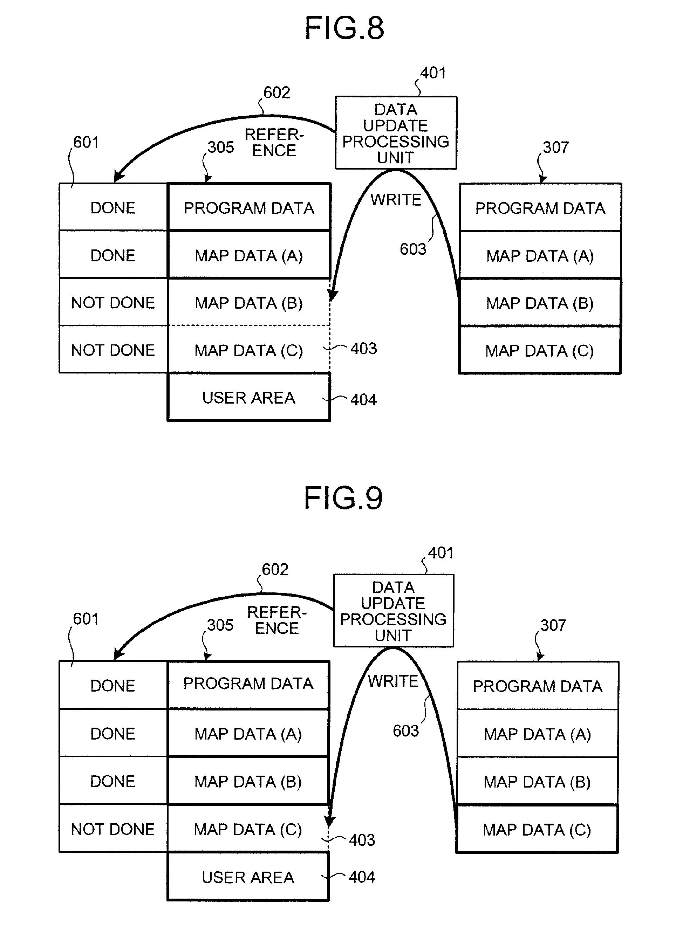

Therefore, as shown in Figs. 8 and 9, the data update processing unit 401 of the CPU 301 executes the abovementioned data update process for the map data (A) to (C) stored in the data area 403 of the HD 305 after the update of the program data has been completed. For example, as shown in Fig. 8, the data update has been completed for the program data and the map data (A) in the data area 403 of the HD 305, and the index information of the index area 601 has been rewritten to indicate "not-updated (not done) → updated (done)". As shown in Fig. 9, the data update has been completed from the program data to the map data (B) in the data area 403 of the HD 305 and the index information of the index area 601 has been rewritten to indicate "not-updated (not done) → updated (done)".

### (Overview of Navigation Operation of Navigation Apparatus)

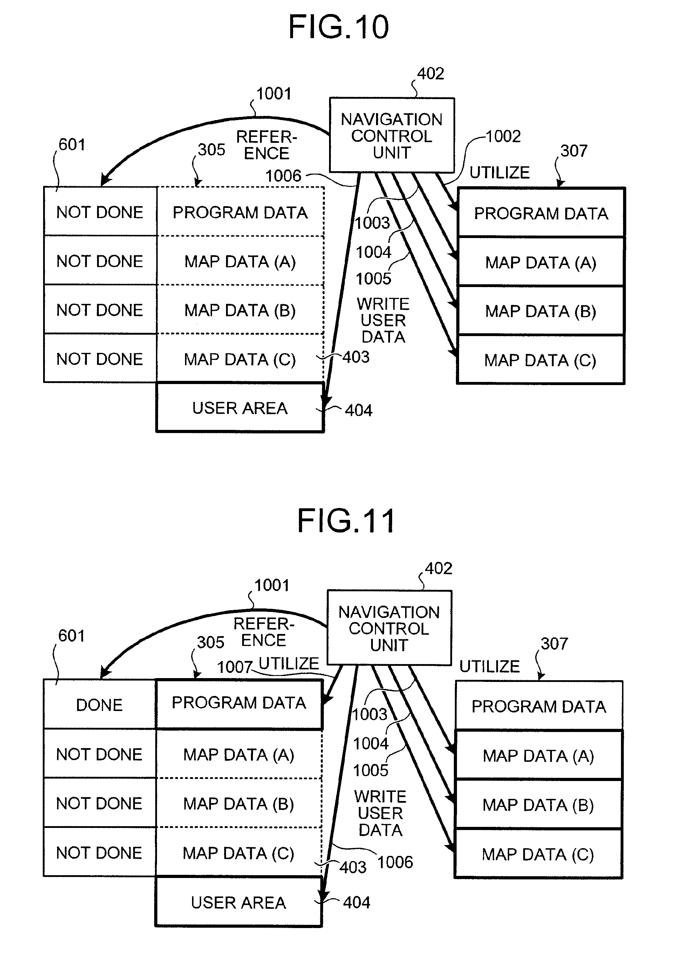

An overview of the navigation operation of the navigation apparatus according to the example of the present invention will be described. Figs. 10 to 13 are explanatory views of the overview of the navigation operation of the navigation apparatus according to the example of the present invention. Specifically, processes shown in Figs. 10 to 13 are implemented by the CPU 301 executing the program stored (recorded) in the ROM 302, the RAM 303, the HD 305, the DVD 307, etc., of the navigation apparatus shown in Fig. 3, for example. This navigation operation process is concurrently executed with the abovementioned data update process.

As shown in Fig. 10, the navigation control unit 402 of the CPU 301 refers to the index information stored in the index area 601 of the HD 305 as shown by an arrow 1001. The navigation control unit 402 utilizes data not in the process of being updating (i.e., data other than the data utilized by the data update processing unit 401 for the data update) among the program data and the map data (A) to (C) recorded on the DVD 307 and the program data and the map data (A) to (C) stored in the data area 403 of the HDD 305 and performs the navigation operation while writing the user data into the user area 404 of the HD 305 as shown by an arrow 1006 regardless of whether the data update process is in progress.

First, the navigation control unit 402 uses (reads) the program data and the map data (A) to (C) of the DVD 307 as shown by arrows 1002 to 1005. The navigation control unit 402 performs the navigation operation while writing the user data into the user area 404 of the HD 305 as shown by the arrow 1006. In this case, since the program data of the DVD 307 are utilized once the program data of the DVD 307 are read into, for example, the RAM 303, the data update processing unit 401 executes the data update process of the program data in the background.

The navigation control unit 402 then refers to the index information stored in the index area 601 of the HD 305 as shown by the arrow 1001. If the data update of the program data has been completed, the navigation control unit 402 preferentially uses the program data written into the data area 403 of the HD 305 to perform the navigation operation as shown by an arrow 1007. Therefore, in this state, the navigation control unit 402 performs the navigation operation by utilizing the program data written into the data area 403 of the HD 305 as shown by the arrow 1007 and the map data (A) to (C) of the DVD 307 as shown by the arrows 1003 to 1005. In this case, for the map data (A) of the DVD 307, the data update processing unit 401 executes the data update process in the background.

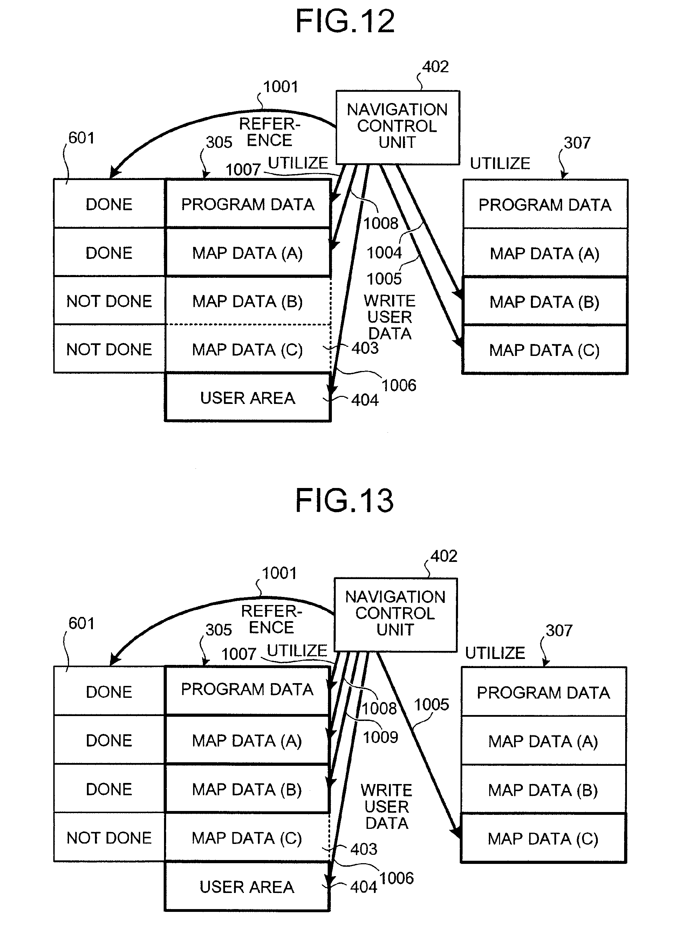

As shown in Fig. 12, the navigation control unit 402 refers to the index information stored in the index area 601 of the HD 305 as shown by the arrow 1001. If the data update has been completed for the program data and the map data (A), the navigation control unit 402 uses the program data and the map data (A) written into the data area 403 of the HD 305 for the program data and the map data (A) as shown by arrows 1007 and 1008 and the map data (B) and the map data (C) recorded on the DVD 307 for the map data (B) and the map data (C) as shown by arrows 1004 and 1005 to perform the navigation operation. In this case, for the map data (B) of the DVD 307, the data update processing unit 401 executes the data update process in the background.

Further, as shown in Fig. 13, the navigation control unit 402 refers to the index information stored in the index area 601 of the HD 305 as shown by the arrow 1001.
If the data update has been completed for the program data, the map data (A), and the map data (B), the navigation control unit 402 uses the program data, the map data (A), and the map data (B) written into the data area 403 of the HD 305 for the program data, the map data (A), and the map data (B) as shown by arrows 1007, 1008, and 1009, and uses the map data (C) recorded on the DVD 307 for the map data (C) as shown by arrow 1005 to perform the navigation operation. In this case, for the map data (C) of the DVD 307, the data update processing unit 401 executes the data update process in the background.

If all the update target data recorded on the DVD 307 are written into the data area 304 of the HD 305 and the data update process of the data update processing unit 401 has been completed, the navigation control unit 402 may use the program data and the map data (A) to (C) written into the data area 304 of the HD 305 to perform the navigation operation since the HD 305 exceeds the DVD 307 in the aspect of the transfer rate.

By executing the data update process and the navigation operation process with the navigation apparatus according to the example of the present invention, the navigation operation can be performed utilizing data not in the process of being updating even when the data update is in progress, and the convenience for the user can be improved enabled utilization of the navigation function even during the data update. Although the data update process has been described using the DVD 307 here, any external recording medium such as a memory card and a PC card may be employed.

As described above, the navigation apparatus according to the example of the present invention can perform the navigation operation by utilizing data not in the process of being updating even when the data required for the navigation operation is being updated, and the navigation function can be utilized even during the update of data, thereby improving the convenience for users.

The data updating method described in the embodiment can be implemented by executing a preliminarily prepared program with a computer such as a personal computer and a workstation. The program is recorded on a computer-readable medium such as a hard disc, a flexible disc, a CD-ROM, an MO, and a DVD and is read from the recording medium by the computer for execution. The program may be a transmission medium distributable through a network such as the Internet.

## Claims

1. A navigation apparatus comprising:
a storage unit that stores, in a plurality of areas, data necessary for navigation operation;
an acquiring unit that acquires the data from an external recording medium;
a comparing/identifying unit that compares and identifies the data stored in the storage unit and the data acquired by the acquiring unit;
an updating unit that controls, based on comparison/identification results of a comparison and an identification by the comparing/identifying unit, an update of the data in the plurality of areas of the storage unit; and
a control unit that, at least while the updating unit is performing the update of the data, performs navigation operation utilizing data that are not being subjected to the update among the data stored in the storage unit and the data acquired by the acquiring unit.

2. The navigation apparatus according to claim 1, wherein
the data include map data and program data, and
the control unit performs the navigation operation utilizing the program data included in the acquired data when the comparing/identifying unit identifies, by comparison, the data acquired by the acquiring unit to be newer.

3. The navigation apparatus according to claim 1 or 2, wherein when the comparing/identifying unit identifies, by comparison, the data acquired by the acquiring unit to be newer, the updating unit controls the update such that the data acquired by the acquiring unit are written into an update target area among the plurality of areas of the storage unit after the data to be updated, stored in the storage unit, are deleted.

4. The navigation apparatus according to claim 1, wherein
the updating unit adds index information indicating an update state of the data in the plurality of areas of the storage unit, and
the control unit refers to the index information added by the updating unit and preferentially uses the updated data in the plurality of areas of the storage unit to perform the navigation operation when the index information indicates that the update is finished.

5. A data update method comprising:
a storing step of storing, in a plurality of areas, data necessary for navigation operation;
an acquiring step of acquiring the data from an external recording medium;
a comparing/identifying step of comparing and identifying the data stored in the storage unit and the data acquired by the acquiring unit;
an updating step of controlling, based on comparison/identification results of a comparison and an identification by the comparing/identifying unit, an update of the data in the plurality of areas of the storage unit; and
a control step of performing navigation operation utilizing data that are not being subjected to the update among the data stored in a storage unit and the data acquired at the acquiring step at least while the updating unit is performing the update of the data.

6. The data update method according to claim 5, wherein the data include map data and program data, and
the control step includes performing the navigation operation utilizing the program data included in the acquired data when at the comparing/identifying step, the data acquired by the acquiring unit is identified, by comparison, to be newer.

7. The data update method according to claim 5 or 6, wherein the updating step includes controlling the update such that the data acquired at the acquiring step are written into an update target area among the plurality of areas of the storage unit after the data to be updated, stored in the storage unit, are deleted when at the comparing/identifying step, the data acquired by the acquiring unit is identified, by comparison, to be newer,.

8. The data update method according to claim 5, wherein
the updating step further includes adding index information that indicates an update state of the data in the plurality of areas of the storage unit, and
the control step further includes
referring to the index information added at the updating step, and
using, preferentially, the data updated in the plurality of areas of the storage unit to perform the navigation operation when the index information indicates that the update is finished.

9. A data update program that causes a computer to execute the date update method according to any one of claims 5 to 8.
